# EUROPEAN PATENT APPLICATION

(11) **EP 4 486 034 A1**
(43) Date of publication of application: **01.01.2025**
(21) Application number: 22928952.5
(22) Date of filing: 20.12.2022
(51) Int. Cl.: H04W 72/0446, H04W 28/04, H04W 72/1263

(54) **TERMINAL, RADIO COMMUNICATION METHOD, AND BASE STATION**

(30) Priority: 22.02.2022 JP 2022025284
(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/046900
(87) International publication number: WO 2023/162435

(57) **Abstract**

Communication is appropriately performed even when one or more TRPs use one piece of DCI (or PDCCH) to transmit/schedule a plurality of DL transmissions. A terminal according to one aspect of the present disclosure includes: a receiving section that receives information related to a transmission direction of a symbol included in a slot; and a control section that assumes that, in a case where a plurality of repetition transmissions of a downlink shared channel to which a time division multiplexing (TDM) scheme is applied is configured in the slot, at least one of the plurality of repetition transmissions does not overlap a UL symbol.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that one or a plurality of transmission/reception points (TRPs) (multi-TRP) use one or a plurality of panels (multi-panel) to perform DL transmission (for example, downlink shared channel (for example, PDSCH) transmission) to a terminal (user terminal, User Equipment (UE)).

In NR, it is also assumed that one or a plurality of transmission/reception points perform transmission/reception of a plurality of signals/channels (for example, multi-PDSCH). For example, it is conceivable that one or more transmission/reception points use one or a plurality of downlink control information (for example, DCI) / downlink control channels (for example, PDCCHs) to control multi-PDSCH transmission.

However, how to control this when one or more TRPs use one piece of DCI (or PDCCH) to transmit/schedule a plurality of DL transmissions (for example, multi-PDSCH) is not studied sufficiently.

Thus, the present disclosure has one object to provide a terminal, a radio communication method, and a base station that can appropriately perform communication even when one or more TRPs use one piece of DCI (or PDCCH) to transmit/schedule a plurality of DL transmissions. Solution to Problem

A terminal according to one aspect of the present disclosure includes: a receiving section that receives information related to a transmission direction of a symbol included in a slot; and a control section that assumes that, in a case where a plurality of repetition transmissions of a downlink shared channel to which a time division multiplexing (TDM) scheme is applied is configured in the slot, at least one of the plurality of repetition transmissions does not overlap a UL symbol.

### Advantageous Effects of Invention

According to one aspect of the present disclosure, it is possible to appropriately perform communication even when one or more TRPs use one piece of DCI (or PDCCH) to transmit/schedule a plurality of DL transmissions.

### Brief Description of Drawings

[FIG. 1] FIG. 1 is a diagram to show an example of schedule control of a physical shared channel based on a PDCCH/DCI.
[FIG. 2] FIG. 2A to FIG. 2D are diagrams to show examples of a multi-TRP scenario.
[FIG. 3] FIG. 3A to FIG. 3C are diagrams to show an example of generation of a Type-1 HARQ-ACK codebook of Rel-15 NR.
[FIG. 4] FIG. 4 is a diagram to show an example of PDSCH repetition transmission in Rel-16 NR.
[FIG. 5] FIG. 5 shows an example of a case where multi-PDSCH scheduling is performed in single-DCI based multi-TRP (single DCI based MTRP PDSCH with tdmschemeA + multi-PDSCH scheduling).
[FIG. 6] FIG. 6 is a diagram to show an example of Type-1 HARQ-ACK feedback.
[FIG. 7] FIG. 7 is a diagram to show an example of a method of determining enabling/disabling of a PDSCH based on SLIVs and UL symbols in the present embodiment.
[FIG. 8] FIG. 8 is a diagram to show another example of the method of determining enabling/disabling of a PDSCH based on SLIVs and UL symbols in the present embodiment.
[FIG. 9] FIG. 9 A to FIG. 9C are diagrams to show other examples of the method of determining enabling/disabling of a PDSCH based on SLIVs and UL symbols in the present embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (Time Domain Resource Allocation)

In an existing system (for example, Rel. 15), time domain resource allocation information of a physical shared channel (at least one of a PDSCH and a PUSCH) is included in downlink control information (DCI). A network (for example, a base station) uses a certain field (for example, a TDRA field) included in the DCI to notify a UE of information related to a time domain resource in which a physical shared channel scheduled by the DCI is scheduled.

The information related to the time domain resource may include, for example, at least one of information indicating an offset between the DCI and the physical shared channel (for example, a slot offset K0), information indicating a start symbol (for example, a start symbol S), and information indicating the length of the physical shared channel (for example, a length L).

Each piece of bit information (or codepoint) notified using the TDRA field may be associated with a different time domain resource allocation candidate (or entry). For example, a table (for example, a TDRA table) in which pieces of bit information and time domain resource allocation candidates (K0, S, L) are associated with each other may be defined. The time domain resource allocation candidate may be defined in a specification in advance or may be notified/configured for the UE by higher layer signaling.

### {PDSCH}

The UE may determine a row index (entry number or entry index) in a certain table, based on the value of the TDRA field in DCI (for example, DCI format 1_0/1_1/1_2). The certain table may include at least one of information indicating a time offset between DCI and a PDSCH scheduled by the DCI (for example, the slot offset K0), information indicating the mapping type of the PDSCH, and the start symbol S and the time length L of the PDSCH. The combination of the start symbol S and the time length L of the PDSCH may be referred to as a Start and Length Indicator (SLIV).

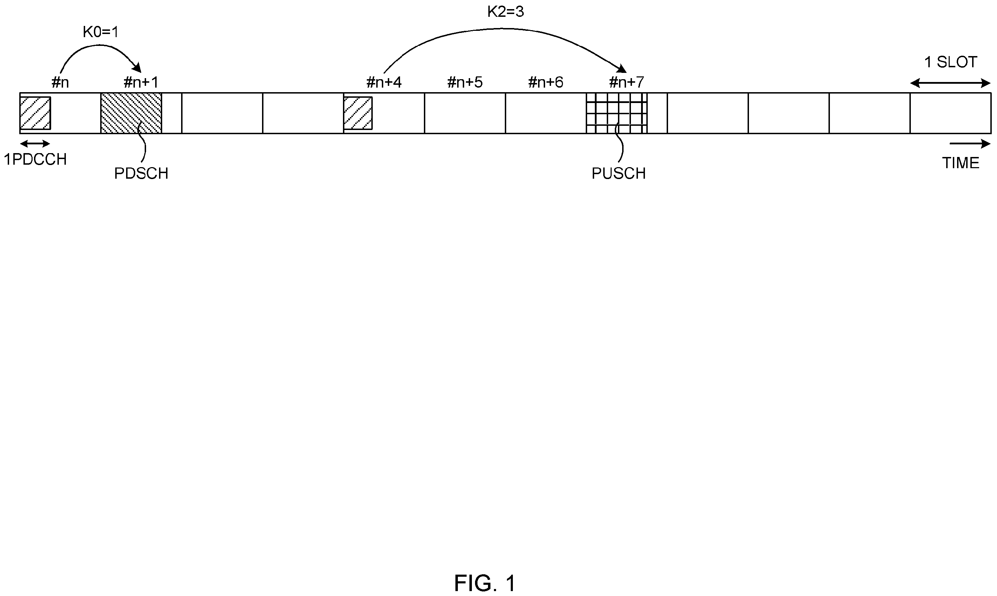

The UE may determine a time domain resource in which the PDSCH is scheduled, based on at least one of the value of a certain field included in the DCI, slot offset K0 information defined in the table, the mapping type, the start symbol S, the symbol length L, and the SLIV (refer to FIG. 1). Note that a reference point of the start symbol S and the symbol length L may be controlled based on the start position (first symbol) of the slot. The start symbol S, the symbol length L, and the like may be defined according to the mapping type of each PDSCH.

As shown in FIG. 1, the UE determines a slot in which a PDSCH is scheduled, with the DCI (or a PDCCH used for transmission of the DCI) being used as a reference point in the time domain. For example, when the DCI for scheduling the PDSCH is received in slot #n, the UE may determine a slot in which the PDSCH is received (allocated to the PDSCH), based on at least one of the number n of the slot, subcarrier spacing µ_{PDSCH} for PDSCH, subcarrier spacing µ_{PDCCH} for PDCCH, and the time offset K0. Here, a case where the slot offset K0 is 1 (K0 = 1) and where the subcarrier spacing for PDSCH and the subcarrier spacing for PDCCH are the same is shown.

For resource allocation information specified by the TDRA field (for example, the SLIV), the UE determines allocation of the PDSCH with the start point of the slot to which the PDSCH is allocated being used as a reference. Note that the reference point may be referred to as a point of reference.

### {PUSCH}

The UE may determine a row index (entry number or entry index) in a certain table, based on the value of the TDRA field in DCI (for example, DCI format 0_0/0_1/0_2). The certain table may include at least one of information indicating a time offset between DCI and a PUSCH scheduled by the DCI (for example, a slot offset K2), information indicating the mapping type of the PUSCH, and the start symbol S and the time length L of the PUSCH. The combination of the start symbol S and the time length L of the PUSCH may be referred to as a Start and Length Indicator (SLIV).

The UE may determine a time domain resource in which the PUSCH is scheduled, based on at least one of the value of a certain field included in the DCI, slot offset K2 information defined in the table, the mapping type, the start symbol S, the symbol length L, and the SLIV (refer to FIG. 1). Note that a reference point of the start symbol S and the symbol length L may be controlled based on the start position (first symbol) of the slot. The start symbol S, the symbol length L, and the like may be defined according to the mapping type of each PDSCH.

As shown in FIG. 1, the UE determines a slot in which a PUSCH is scheduled, with DCI (or a PDCCH used for transmission of the DCI) being used as a reference point in the time domain. For example, when the DCI for scheduling the PUSCH is received in slot #(n + 4), the UE may determine a slot in which the PUSCH is transmitted (allocated to the PUSCH), based on at least one of the number (n + 4) of the slot, subcarrier spacing µ_{PDSCH} for PUSCH, subcarrier spacing µ_{PDCCH} for PUCCH, and the time offset K2 above. Here, a case where the slot offset K2 is three (K2 = 3) and where the subcarrier spacing for PDSCH and the subcarrier spacing for PDCCH are the same is shown.

For resource allocation information specified by the TDRA field (for example, the SLIV), the UE determines allocation of the PUSCH with the start point of the slot to which the PUSCH is allocated being used as a reference.

### (Multi-TRP)

For NR, it is studied that one or a plurality of transmission/reception points (TRPs) (multi-TRP) use one or a plurality of panels (multi-panel) to perform DL transmission to a UE. It is also studied that the UE performs UL transmission to the one or plurality of TRPs.

Note that the plurality of TRPs may correspond to the same cell identifier (ID) or may correspond to different cell IDs. The cell ID(s) may correspond to a physical cell ID(s) or a virtual cell ID(s).

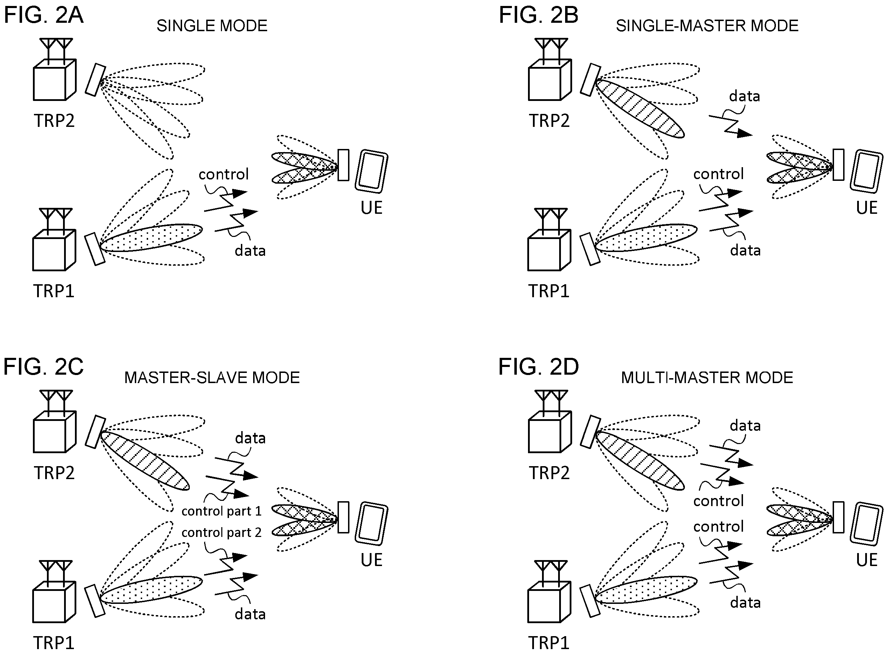

FIGS. 2A to 2D are diagrams to show examples of a multi-TRP scenario. In these examples, it is assumed that each TRP can transmit four different beams, but this is not restrictive.

FIG. 2A shows an example of a case where only one TRP (TRP1 in this example) of multi-TRP performs transmission to a UE (which may be referred to as a single mode, a single TRP, and the like). In this case, TRP1 transmits both a control signal (PDCCH) and a data signal (PDSCH) to the UE.

FIG. 2B shows an example of a case where only one TRP (TRP1 in this example) of multi-TRP transmits a control signal to a UE and the multi-TRP transmit data signals (which may be referred to as a single-master mode). The UE receives PDSCHs transmitted from the multi-TRP, based on one piece of downlink control information (DCI).

FIG. 2C shows an example of a case where each TRP of multi-TRP transmits part of a control signal to a UE and the multi-TRP transmit data signals (which may be referred to as a master-slave mode). TRP1 may transmit part 1 of the control signal (DCI), and TRP2 may transmit part 2 of the control signal (DCI). Part 2 of the control signal may depend on part 1. The UE receives PDSCHs transmitted from the multi-TRP, based on these parts of the DCI.

FIG. 2D shows an example of a case where each TRP of multi-TRP transmits a different control signal to a UE and the multi-TRP transmit data signals (which may be referred to as a multi-master mode). TRP1 may transmit of a first control signal (DCI), and TRP2 may transmit a second control signal (DCI). The UE receives PDSCHs transmitted from the multi-TRP, based on these DCI.

When a plurality of PDSCHs (which may be referred to as multi-PDSCH (multiple PDSCHs)) from multi-TRP are scheduled by using one piece of DCI as in FIG. 2B, the DCI may be referred to as single DCI (S-DCI, single PDCCH). When a plurality of PDSCHs from multi-TRP are scheduled by using a plurality of respective DCI as in FIG. 2D, the plurality of DCI may be referred to as multi-DCI (M-DCI, multi-PDCCH (multiple PDCCHs)) .

A different transport block (TB) / codeword (Code Word (CW)) / different layer may be transmitted from each TRP of the multi-TRP. Alternatively, the same TB/CW/layer may be transmitted from the TRPs of the multi-TRP.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, 4). In scheme 1, multi-PDSCH from multi-TRP are space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP are time division multiplexed (TDMed). In scheme 3, multi-PDSCH from multi-TRP are transmitted in one slot. In scheme 4, multi-PDSCH from multi-TRP are transmitted in different slots.

According to such a multi-TRP scenario, more flexible transmission control using a channel with high quality is possible.

NCJT using multi-TRP/panel has a possibility of using a high rank. To support ideal backhaul and non-ideal backhaul between a plurality of TRPs, both single DCI (single PDCCH, for example, FIG. 2B) and multi-DCI (multi-PDCCH, for example, FIG. 2D) may be supported. For both single-DCI and multi-DCI, the maximum number of TRPs may be two.

For single-PDCCH design (mainly for ideal backhaul), enhancement of a TCI is studied. Each TCI codepoint in DCI may correspond to one or two TCI states. The TCI field size may be the same as that of Rel. 15.

### (HARQ-ACK Codebook)

A UE may use one PUCCH resource to transmit HARQ-ACK feedback, in units of HARQ-ACK codebook constituted of bits of one or more pieces of transmission confirmation information (for example, Hybrid Automatic Repeat reQuest ACKnowledgement (HARQ-ACK)). The HARQ-ACK bits may be referred to as HARQ-ACK information, HARQ-ACK information bits, and the like.

Here, the HARQ-ACK codebook may be configured by including bits for HARQ-ACK in units of at least one of time domain (for example, slot), frequency domain (for example, component carrier (CC)), space domain (for example, layer), transport block (TB), and a code block group (CBG) constituting a TB. The HARQ-ACK codebook may be referred to simply as a codebook.

Note that the number of bits (size) and the like included in the HARQ-ACK codebook may be determined semi-statically or dynamically. An HARQ-ACK codebook the size of which is determined semi-statically is referred to as a semi-static HARQ-ACK codebook, a Type-1 HARQ-ACK codebook, and the like. An HARQ-ACK codebook the size of which is determined dynamically is referred to as a dynamic HARQ-ACK codebook, a Type-2 HARQ-ACK codebook, and the like.

Whether to use the Type-1 HARQ-ACK codebook and the Type-2 HARQ-ACK codebook may be configured for the UE by using a higher layer parameter (for example, pdsch-HARQ-ACK-Codebook).

In a case of the Type-1 HARQ-ACK codebook, the UE may feed back, in a certain range (for example, a range configured based on the higher layer parameter), HARQ-ACK bits for a PDSCH candidate (or a PDSCH occasion) corresponding to the range, irrespective of presence/absence of scheduling of a PDSCH.

The range may be determined based on at least one of a set of certain periods (for example, a specific number of occasions for PDSCH reception serving as candidates) or a specific number of monitoring occasions for downlink control channel (Physical Downlink Control Channel (PDCCH)), the number of CCs configured for the UE or activated, the number of TBs (the number of layers or ranks), the number of CBGs per TB, and presence/absence of application of spatial bundling. The specific range may be referred to as an HARQ-ACK window, an HARQ-ACK bundling window, an HARQ-ACK feedback window, and the like.

In the case of Type-1 HARQ-ACK codebook, even when scheduling of a PDSCH for the UE is absent, the UE ensures HARQ-ACK bits for the PDSCH in the codebook as long as the range is within the specific range. When the UE determines that the PDSCH is not scheduled in actual, the UE can feed back the bits as NACK bits.

In contrast, in a case of the Type-2 HARQ-ACK codebook, the UE may feed back, in the above certain range, HARQ-ACK bits for a scheduled PDSCH.

In Rel-15/16 NR, a UE determines an HARQ-ACK codebook for a PDSCH in one or a plurality of slots transmitted by using a certain PUCCH, based on the value of HARQ-ACK timing.

Transmission timing of an HARQ-ACK for a dynamic PDSCH (which may be referred to as PDSCH-to-HARQ feedback timing, Ki, and the like)may be indicated by a PDSCH-to-HARQ feedback timing indicator field included in DCI for scheduling the dynamic PDSCH (for example, DCI format 1_0/1_1). By assuming that the last slot in which a certain PDSCH is received is n, the UE transmits the HARQ-ACK corresponding to the PDSCH in an (n + K₁) slot.

The UE may determine the size of a window of a semi-static HARQ-ACK codebook transmitted in a PUCCH of a certain slot (which may be referred to as an HARQ-ACK window), based on the number of slots having the same value of (n + K₁).

Next, for each slot corresponding to the HARQ-ACK window, the UE determines a candidate PDSCH reception occasion (also referred to as a candidate PDSCH occasion or simply as an occasion). Note that a candidate PDSCH occasion overlapping a UL symbol is excluded from targets of the semi-static HARQ-ACK codebook.

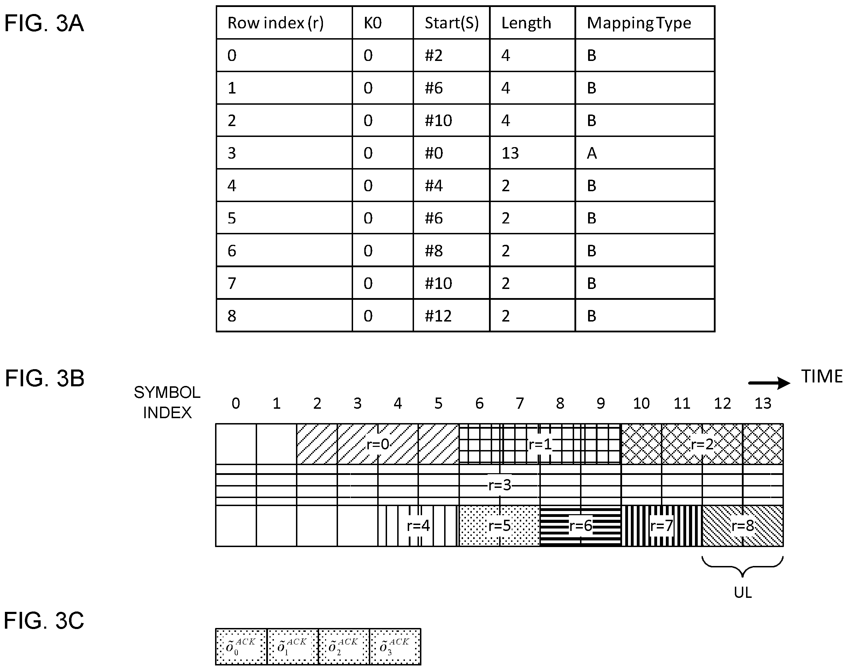

FIG. 3A to FIG. 3C are diagrams to show an example of generation of a Type-1 HARQ-ACK codebook of Rel-15 NR. FIG. 3A is a diagram to show an example of a list related to time domain resource allocation for PDSCH, the list being configured for a UE or defined in a specification. A row index r in FIG. 3A corresponds to the value of a time domain resource allocation field included in DCI.

K₀ denotes the number of symbols from PDCCH (DCI) reception to PDSCH reception. Start denotes an index S of a start symbol in a slot of a corresponding PDSCH. Length denotes the length (the number of symbols) of the PDSCH. Mapping type denotes the resource allocation type (A or B) of the PDSCH.

FIG. 3B shows candidate PDSCH occasions corresponding to the list in FIG. 3A. For example, the candidate PDSCH occasion corresponding to r = 0 corresponds to a period starting from symbol #2 and having a length of four symbols.

The UE excludes/deletes each candidate PDSCH occasion overlapping a UL symbol (for example, a symbol configured as UL by a higher layer parameter). In this example, since the last two symbols of this slot are UL symbols, the candidate PDSCH occasions corresponding to r = 2, 3, 8 are deleted, and r = {0, 1, 4, 5, 6, 7} in FIG. 3B correspond to j = {0, 1, 0, 1, 2, 3}, respectively. Here, j is an index indicating the position of a corresponding bit in a sequence of the HARQ-ACK codebook to be transmitted.

For each overlapping candidate PDSCH occasion, the UE can generate only one HARQ-ACK bit in accordance with a certain rule. Hence, a set M_{A,c} of candidate PDSCH occasions is determined to be {0, 1, 2, 3} (M_{A,c} = {0, 1, 2, 3}).

Lastly, the UE may determine the number of HARQ-ACK bits, based on the number of elements (also referred to as cardinality) of the M_{A,c}. FIG. 3C is a diagram to show the bits of the HARQ-ACK codebook corresponding to FIG. 3B. FIG. 3C shows four bits in total from o₀^{ACK} to o₃^{ACK}. Note that a tilde placed over "o" of oₖ^{ACK} (k is an integer) is omitted in description for simplicity herein, but this is interchangeable as a notation with a tilde as those shown in FIG. 3C.

TB based HARQ-ACK bits are arranged in an order from the one having an earlier (lower) CC index and then from the one having an earlier (smaller) PDCCH monitoring period. In other words, o₀^{ACK} to o₃^{ACK} in FIG. 3C may correspond to M_{A,c} = {0, 1, 2, 3} above, respectively.

Note that, although FIG. 3C shows the contents of the HARQ-ACK codebook corresponding only to one slot in FIG. 3B, when an HARQ-ACK codebook corresponding to a PDSCH in a plurality of slots is transmitted in the same slot, the number of bits of the HARQ-ACK codebook may be different from that in FIG. 3C.

### (PDSCH Repetition Transmission)

In Rel-15/16 NR or later versions, PDSCH repetition transmission is studied. For example, for PDSCH transmission using a plurality of transmission/reception points (TRPs) (multi-TRP) or a plurality of panels (multi-panel), PDSCH repetition transmission may be performed.

A UE may be configured with at least one of frequency division multiplexing (FDM) scheme A (`FDMSchemeA'), FDM scheme B (`FDMSchemeB'), time division multiplexing (TDM) scheme A (`TDMSchemeA'), and the like as the value of a higher layer parameter related to enabling of a PDSCH repetition transmission scheme (RepSchemeEnabler).

When two TCI states are specified in a codepoint of a transmission configuration indication (TCI) (which may also be referred to as a transmission configuration indication) field of DCI, the UE configured with TDM scheme A receives two PDSCH transmission occasions of the same TB in each TCI state related to PDSCH transmission occasion. Here, one of the two PDSCH transmission occasions corresponds to time domain resource allocation not overlapping with respect to the other. Both of the two PDSCH transmission occasions may be received in a certain slot.

Note that, in the present disclosure, a PDSCH transmission occasion may be interpreted as a PDSCH reception occasion.

The UE configured with the TDM scheme A and specified with two TCI states expects to receive two PDSCH transmission occasions. Here, a first TCI state of the two TCI states is applied to a first PDSCH transmission occasion, and a second TCI state of the two TCI states is applied to a second PDSCH transmission occasion. These two PDSCH transmission occasions correspond to repetition transmission of TDM scheme A.

The time domain resource allocation for the first PDSCH transmission occasion may be determined according to the time domain resource allocation field of the DCI. The time domain resource allocation for the second PDSCH transmission occasion may have the same number of symbols as that of the first PDSCH transmission occasion.

The UE may determine that the first symbol of the second PDSCH transmission occasion starts a certain number of symbols after the last symbol of the first PDSCH transmission occasion. The certain number of symbols may be given by a higher layer parameter (StartingSymbolOffsetK), or may be assumed to be 0 by the UE when the higher layer parameter is not given.

The UE need not expect to receive more than two PDSCH transmission layers for each PDSCH transmission occasion.

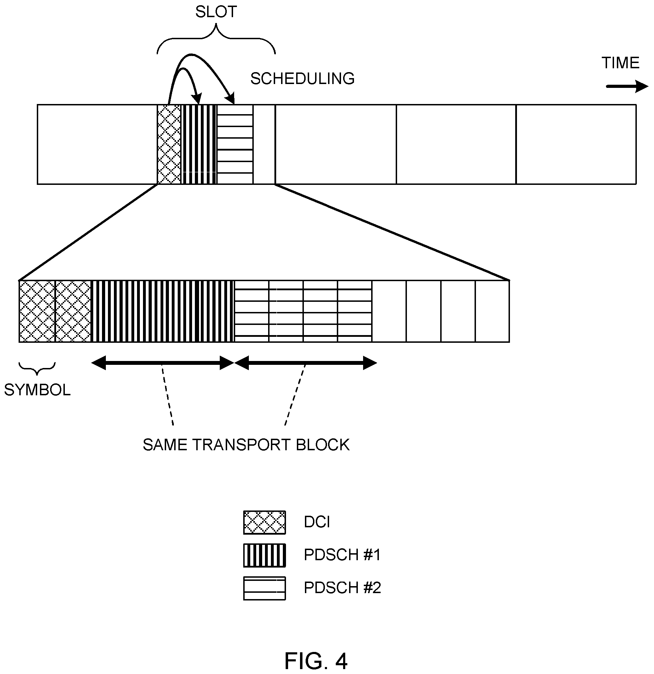

FIG. 4 is a diagram to show an example of PDSCH repetition transmission in Rel-16 NR. In this example, a UE configured with TDM scheme A receives, in a certain slot, DCI for scheduling repetition transmission of PDSCHs (PDSCHs #1 and #2) in the slot and receives these PDSCHs according to the DCI. PDSCHS #1 and #2 may be the same TB. Note that, in this example, StartingSymbolOffsetK above is not given to the UE, and transmission of PDSCH #2 starts from the symbol immediately after PDSCH #1.

### (Multi-PDSCH)

In Rel-17 NR or later versions, it is studied to support a plurality of PDSCHs (multi-PDSCH) scheduled by single DCI. For example, it is assumed to support single-TRP based multi-PDSCH (S-TRP based multi-PDSCH) and multi-TRP based multi-PDSCH (M-TRP based multi-PDSCH).

It is assumed that, when scheduling of multi-TRP based multi-PDSCH is performed by DCI (for example, single DCI), a single DCI field for TCI notification (for example, Transmission Configuration Indication) in the DCI is supported. For the single DCI field, a TCI state indication mechanism for multi-TRP in Rel. 16 may be reused.

The single DCI field may indicate one or a plurality of (for example, two) TCI states related to a codepoint for a single-DCI based multi-TRP mechanism. In this case, multi-PDSCH using single DCI in multi-TRP (for example, S-DCI M-TRP multi-PDSCH) is conceivable.

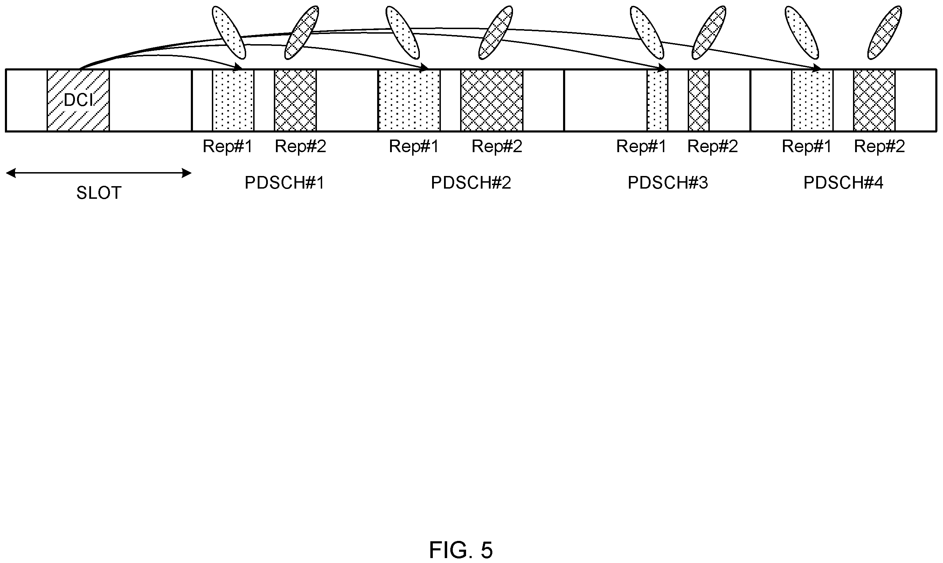

FIG. 5 shows an example of a case where multi-PDSCH scheduling is performed in single-DCI based multi-TRP. FIG. 5 shows a case where TDM Scheme A (tdmschemeA) is applied as the PDSCHs of the multi-TRP (for example, PDSCH repetitions) (single DCI based MTRP PDSCH with tdmschemeA + multi-PDSCH scheduling).

The single DCI field (for example, Transmission Configuration Indication) may indicate one or two TCI states related to the codepoint for a single-DCI based multi-TRP mechanism. In this case, the UE need to receive two PDSCH repetitions of the same transport block (TB) for each scheduled PDSCH. The two PDSCH repetitions (or TBs corresponding to the two respective PDSCH repetitions) may have each TCI state associated with the PDSCH transmission occasions in the same slot.

For example, in the same slot, by using a first repetition (for example, Rep #1) corresponding to PDSCH #1 and a second repetition (for example, Rep #2), the same TB may be repeatedly transmitted. In the present disclosure, the first repetition (for example, Rep #1) and the second repetition (for example, Rep #2) in a slot may be interpreted as a first PDSCH transmission occasion and a second PDSCH transmission occasion in a slot.

In this case, the same number of symbols as that of the PDSCH corresponding to the first repetition (for example, Rep #1) (first PDSCH repetition) may be applied to / configured for the PDSCH corresponding to the second repetition (for example, Rep #2) (second PDSCH rpetition). In other words, in the same slot, the number of symbols of the first PDSCH transmission occasion and the number of symbols of the second PDSCH transmission occasion may be configured in common.

When a certain offset (for example, a start symbol offset (for example, K-)) is configured, the UE may determine that the start symbol of the second PDSCH transmission occasion starts a certain symbol(s) (for example, K- symbols) after the last symbol of the first PDSCH transmission occasion. The start symbol offset (for example, K-) may be notified/configured for the UE by a base station by using a higher layer parameter (for example, StartingSymbolOffsetK).

The certain offset (for example, the start symbol offset (for example, K-)) may be applied to multi-PDSCH scheduled by one piece of DCI (for example, the first repetition and the second repetition in each slot) in common.

### (HARQ-ACK Feedback for Multi-PDSCH Schedule)

A Type-1 HARQ-ACK codebook not performing time domain bundling may be applied to HARQ-ACK feedback for multi-PDSCH schedule.

For the Type-1 HARQ-ACK codebook not performing time domain bundling, a set of DL slots may include all the DL slots (unique DL slots) determined in consideration of all the combinations of configured values of K1 and configured rows of a TDRA table.

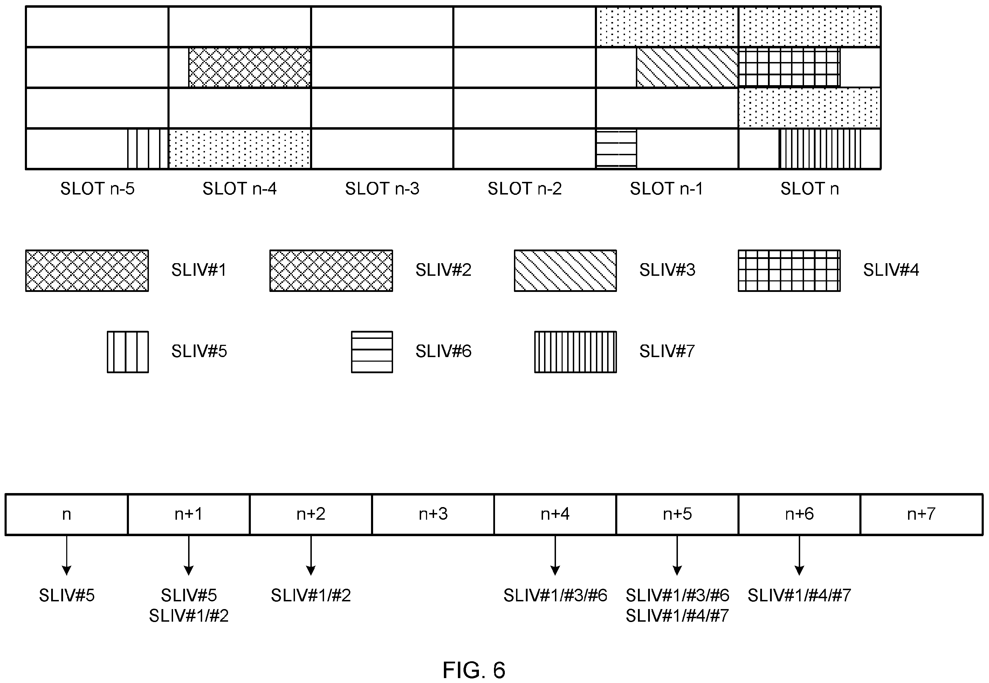

A set of SLIVs corresponding to a DL slot (or a DL slot belonging to the set of DL slots) may include all the SLIVs of the slot determined in consideration of all the combinations of configured values of K1 and configured rows of a TDRA table as described above. FIG. 6 shows an example of a case where HARQ-ACK feedback (or HARQ-ACK codebook generation) is performed in consideration of SLIVS in a plurality of slots.

To determine candidates for a PDSCH reception occasion (candidate PDSCH reception occasions) for the set of SLIVs corresponding to each DL slot belonging to the set of DL slots, a procedure of Rel. 16 may be reused. The procedure of Rel. 16 may include, for example, for both a UE that can receive a plurality of PDSCHs for each slot and a UE that cannot receive a plurality of PDSCHs for each slot, pruning of a plurality of SLIVs corresponding to the DL slot.

For example, in a case of using the procedure of Rel. 16, when a SLIV overlaps a certain UL symbol, the SLIV may be deleted. The certain UL symbol may be a UL symbol semi-statically configured by a higher layer parameter or the like (semi-static UL symbol), for example.

However, a problem is how to control each PDSCH repetition transmission when multi-PDSCH scheduling is performed in single-DCI based multi-TRP (for example, single DCI based MTRP PDSCH with tdmschemeA + multi-PDSCH scheduling). For example, a problem is how to judge enabling/disabling of a PDSCH in consideration of TDD collision (for example, collision with a UL symbol) for each repetition transmission. Alternatively, a problem is how to control HARQ-ACK feedback for a PDSCH.

Thus, the inventors of the present invention studied a relationship between each PDSCH and a UL symbol in a case of performing multi-PDSCH scheduling in single-DCI based multi-TRP, and came up with the idea of the present embodiment.

The PDSCHs may be PDSCHs included in the same symbol (or PDSCHs used for transmissions of the same TB). The UL symbol may be a UL symbol semi-statically configured (for example, by a higher layer parameter).

Embodiments according to the present disclosure will be described in detail with reference to the drawings as follows. The radio communication methods according to respective embodiments may each be employed individually, or may be employed in combination.

Note that, in the present disclosure, "A/B" may mean "at least one of A and B." In the present disclosure, "A/B/C" may mean "at least one of A, B, and C."

In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a panel, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, the position of one TCI state of two TCI states corresponding to one codepoint of a field in DCI (ordinal number, first TCI state or second TCI state), and a TRP may be interchangeably interpreted.

In the present disclosure, a panel, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, and a CORESET group may be interchangeably interpreted.

A panel may be associated with at least one of a panel ID, a UL TCI state, a UL beam, a L beam, a DL RS resource, and spatial relation information.

In the present disclosure, multi-TRP, a multi-TRP system, multi-TRP transmission, multi-PDSCH, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a single TRP, single DCI, a single PDCCH, multi-TRP based on single DCI, a single-TRP system, single-TRP transmission, a single PDSCH, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states, and two TCI states in at least one TCI codepoint being activated may be interchangeably interpreted.

In the present disclosure, "switch," "determine," and "select" may be interchangeably interpreted.

### (Radio Communication Method)

### <First Embodiment>

In a first embodiment, description will be given of PDSCHs scheduled by DCI for multi-PDSCH schedule (for example, multi-PDSCH scheduling DCI) in a case where intra-slot multi-TRP PDSCH repetition (for example, intra-slot M-TRP PDSCH repetiton) is applied. The DCI may be single DCI (apparently, not limited to this).

In the following description, multi-TRP with single DCI with a certain scheme (here, time multiplexing scheme (for example, tdmschemeA)) being configured as intra-slot multi-TRP PDSCH repetition is used as an example for description, but this is not restrictive.

The intra-slot multi-TRP PDSCH repetition (for example, intra-slot M-TRP PDSCH repetiton) may be configured for a UE by a base station by higher layer signaling. The scheme of the intra-slot multi-TRP PDSCH repetition (for example, tdmschemeA) may be configured by a higher layer parameter (for example, RepSchemeEnabler). The present embodiment may be preferably applied to a case where two TCI states are indicated by a DCI field "transmission configuration indication" (or a case where at least one codepoint is mapped to two TCI states).

For the PDSCHs scheduled by the DCI for multi-PDSCH schedule, at least one of option 1-1 to option 1-7 below (or a combination of two or more of the options) may be applied/supported.

### {Option 1-1}

Any of repetitions of a scheduled PDSCH may be controlled not to overlap a configured UL symbol. The repetitions of the scheduled PDSCH correspond to repetition transmissions (for example, Rep #1, Rep #2) in the same slot. The configured UL symbol may be interpreted as a semi-static UL symbol or a UL symbol configured by a higher layer parameter.

The UE need not expect/assume that the repetition of the scheduled PDSCH overlaps a configured UL symbol. The base station may perform control not to schedule any repetition transmission of a PDSCH in the time domain configured with a UL symbol by a higher layer parameter. Alternatively, the base station may perform control to schedule repetition transmission of a PDSCH in a domain different from the time domain configured with a UL symbol.

### {Option 1-2}

Both of repetitions of a scheduled PDSCH may be controlled not to overlap a configured UL symbol. For example, both of the repetitions of the PDSCH may be a first repetition (Rep #1) and a second repetition (Rep #2) corresponding to PDSCH #x in the same symbol, for example.

The UE need not expect/assume that both of the repetitions of the scheduled PDSCH overlap configured UL symbols. The base station may perform control not to schedule both of repetition transmissions of a PDSCH in the time domain configured with a UL symbol by a higher layer parameter. Alternatively, the base station may perform control to schedule both of repetition transmissions of a PDSCH in a domain different from the time domain configured with a UL symbol.

### {Option 1-3}

A specific repetition of a scheduled PDSCH may be controlled not to overlap a configured UL symbol. For example, the specific repetition may be the first repetition (Rep #1) or the second repetition (Rep #2) corresponding to PDSCH #x in the same symbol.

The UE need not expect/assume that the specific repetition (for example, the first repetition / second repetition) of the scheduled PDSCH overlaps a configured UL symbol. The base station may perform control not to schedule a specific repetition transmission of a PDSCH in the time domain configured with a UL symbol by a higher layer parameter. Alternatively, the base station may perform control to schedule a specific repetition transmission of a PDSCH in a domain different from the time domain configured with a UL symbol.

### {Option 1-4}

One of repetitions of a scheduled PDSCH may be controlled to overlap a configured UL symbol, and the other repetition may be controlled not to overlap a configured UL symbol.

The UE may expect/assume that one of the repetitions of the scheduled PDSCH overlaps a configured UL symbols and the other repetition does not overlap a configured UL symbol. The base station may perform control to schedule one of repetition transmissions of a PDSCH and not to schedule the other repetition transmission in the time domain configured with a UL symbol by a higher layer parameter.

For example, the UE may expect/assume that, among the repetitions of the PDSCH, the first repetition (Rep #1) overlaps a configured UL symbol and the second repetition (Rep #2) does not overlap a configured UL symbol. Alternatively, the UE may expect/assume that, among the repetitions of the PDSCH, the first repetition (Rep #1) does not overlap a configured UL symbol and the second repetition (Rep #2) overlaps a configured UL symbol.

### {Option 1-5}

When any of repetitions of a scheduled PDSCH overlaps a configured UL symbol, the scheduled PDSCH may be disabled.

When any of the repetition of the scheduled PDSCH overlaps a configured UL symbol, the UE may determine that the scheduled PDSCH is disabled.

In the present disclosure, a UL symbol and a PDSCH overlapping may be a case where at least one symbol corresponding to the PDSCH overlaps the UL symbol or a case where a certain number of (or a certain ratio of) symbols of the symbols corresponding to the PDSCH overlap a UL symbol(s) .

### {Option 1-6}

When a specific repetition (for example, a first repetition / second repetition) of a scheduled PDSCH overlaps a configured UL symbol, the scheduled PDSCH may be disabled.

When the specific repetition of the scheduled PDSCH overlaps a configured UL symbol, the UE may determine that the scheduled PDSCH is disabled.

### {Option 1-7}

When both of repetitions (for example, both a first repetition and a second repetition) of a scheduled PDSCH overlap configured UL symbols, the scheduled PDSCH may be disabled.

When both of the repetitions of the scheduled PDSCH overlap configured UL symbols, the UE may determine that the scheduled PDSCH is disabled. In contrast, when only one of the repetitions of the scheduled PDSCH overlaps a UL symbol (or when a PDSCH repetition not overlapping a UL symbol is present), the UE may determine that the scheduled PDSCH is enabled.

In the first embodiment, at least one of variation 1 to variation 5 below may be applied.

### <<Variation 1>>

When semi-static (for example, Type-1) HARQ-ACK codebook/feedback is configured, control may be performed so that multi-PDSCH scheduling and single-DCI based multi-TRP intra-slot PDSCH repetition are not configured simultaneously.

For example, when Type-1 HARQ-ACK codebook/feedback is configured, the UE need not assume that condition 1-1 to condition 1-3 are satisfied simultaneously. Condition 1-1 may be that multi-PDSCH scheduling is configured for a serving cell/BWP, condition 1-2 may be that a TCI codepoint (at least one codepoint) is simultaneously mapped to two TCI states / QCLs in the serving cell/BWP, and condition 1-3 may be that tdmAchemeA is configured.

### <<Variation 2>>

When semi-static (for example, Type-1) HARQ-ACK codebook/feedback is configured, control may be performed so that any repetition of a scheduled PDSCH does not overlap a semi-static UL symbol.

For example, for joint operation of multi-PDSCH scheduling and single-DCI based multi-TRP intra-slot PDSCH repetition, when Type-1 HARQ-ACK codebook/feedback is configured, the UE need not assume that any repetition of the scheduled PDSCH overlaps a semi-static UL symbol.

### <<Variation 3>>

When semi-static (for example, Type-1) HARQ-ACK codebook/feedback is configured, control may be performed so that both repetitions of a scheduled PDSCH do not overlap semi-static UL symbols.

For example, for joint operation of multi-PDSCH scheduling and single-DCI based multi-TRP intra-slot PDSCH repetition, when Type-1 HARQ-ACK codebook/feedback is configured, the UE need not assume that both of the repetitions of the scheduled PDSCH overlap semi-static UL symbols.

### <<Variation 4>>

When semi-static (for example, Type-1) HARQ-ACK codebook/feedback is configured, control may be performed so that a specific repetition (for example, a first repetition / second repetition) of a scheduled PDSCH does not overlap a semi-static UL symbol.

For example, for joint operation of multi-PDSCH scheduling and single-DCI based multi-TRP intra-slot PDSCH repetition, when Type-1 HARQ-ACK codebook/feedback is configured, the UE need not assume that the specific repetition of the scheduled PDSCH overlaps a semi-static UL symbol.

### <<Variation 5>>

When semi-static (for example, Type-1) HARQ-ACK codebook/feedback is configured, control may be performed so that one of repetitions of a scheduled PDSCH does not overlap a semi-static UL symbol and the other repetition overlaps a semi-static UL symbol.

For example, for joint operation of multi-PDSCH scheduling and single-DCI based multi-TRP intra-slot PDSCH repetition, when Type-1 HARQ-ACK codebook/feedback is configured, the UE may assume that one of the repetitions of the scheduled PDSCH does not overlap a semi-static UL symbol and the other repetition overlaps a semi-static UL symbol.

### <Second Embodiment>

In a second embodiment, description will be given of an example of control of HARQ-ACK feedback (or HARQ-ACK codebook generation) for PDSCH repetition in a case where intra-slot multi-TRP PDSCH repetition (for example, intra-slot M-TRP PDSCH repetiton) is applied. The second embodiment may be applied in combination with the first embodiment.

In the following description, multi-TRP with single DCI with a certain scheme (here, tdmschemeA)) being configured as intra-slot multi-TRP PDSCH repetition is used as an example for description, but this is not restrictive. In the following description, a case where a semi-statically configured HARQ-ACK codebook (for example, Type-1 HARQ-ACK codebook) is applied in HARQ-ACK feedback is used as an example for description, but this is not restrictive.

For the PDSCHs scheduled by the DCI for multi-PDSCH schedule, at least one of option 2-1 to option 2-3 below may be applied/supported.

Note that, for a plurality of (for example, two) PDSCH repetitions in the same slot, SLIV #x corresponding to a first repetition may be indicated by DCI / higher layer signaling, and SLIV #x' corresponding to a second repetition may be determined based on SLIV #x and a certain offset (for example, K-) .

### {Option 2-1}

Based on whether any of repetitions of a scheduled PDSCH overlaps a configured UL symbol, generation of an HARQ-ACK codebook may be controlled. For example, option 2-1 may be preferably applied to a case where, when any of the repetitions of the scheduled PDSCH overlaps a configured UL symbol, the scheduled PDSCH is disabled (option 1-5 above).

In this case, optimization of time domain resource allocation (TDRA) pruning (for example, TDRA pruning optimization) may be performed.

As a modification of the TDRA pruning, an SLIV having a start symbol S / length L may be deleted in TDRA pruning in each DL slot candidate. For example, when an SLIV having a certain start symbol S / length L overlaps a UL symbol (for example, a semi-static UL symbol), the SLIV may be deleted.

In the present disclosure, an SLIV being deleted may mean that, in HARQ-ACK codebook generation, the PDSCH corresponding to the SLIV (for example, PDSCH repetition corresponding to the SLIV or PDSCH schedule including the PDSCH repetition corresponding to the SLIV) is deleted/ignored.

Assume a case where an SLIV cannot be scheduled for intra-slot M-TRP PDSCH repetition. The case where an SLIV cannot be scheduled for intra-slot M-TRP PDSCH repetition may be a case where (S + L + offset (K-) + L) is larger than 14, for example. In this case, when the SLIV overlaps a UL symbol (for example, a semi-static UL symbol), the SLIV may be deleted.

Assume a case where an SLIV can be scheduled for intra-slot M-TRP PDSCH repetition. The case where an SLIV can be scheduled for intra-slot M-TRP PDSCH repetition may be a case where (S + L + offset (K-) + L) is not larger than 14, for example. In this case, in a case where the SLIV overlaps a UL symbol (for example, a semi-static UL symbol) or a case where any of symbols from (S + L + K-) to (S + L + K⁻ + L) overlaps a UL symbol, the SLIV may be deleted.

In other words, at least one of a first repetition and a second repetition is disabled (or overlaps a UL symbol), the UE performs control not to include (or to delete) an HARQ-ACK of the PDSCH in the slot.

Note that the case where the SLIV overlaps a UL symbol (for example, a semi-static UL symbol) or the case where any of symbols from (S + L + K-) to (S + L + K- + L) overlaps a UL symbol may be interpreted as a case where any of symbols from S to (S + L) or any of symbols from (S + L + K-) to (S + L + K- + L) overlaps a UL symbol.

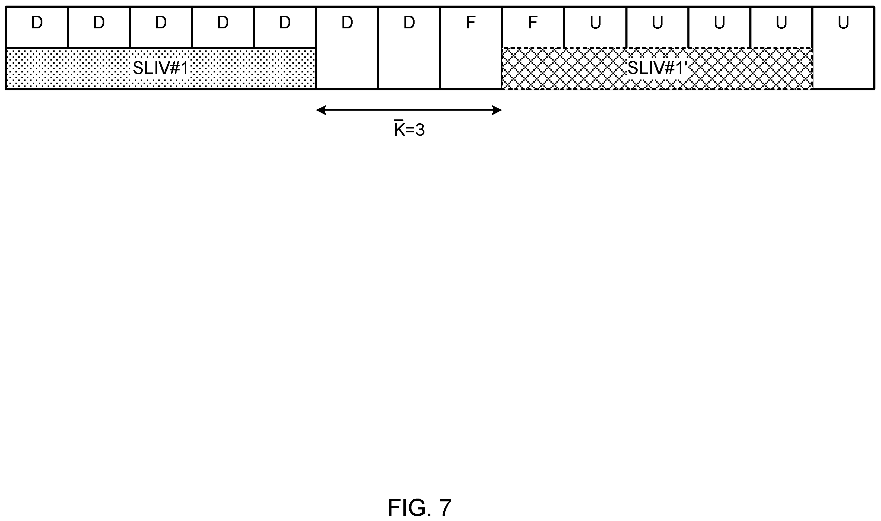

As described above, when SLIV #1 corresponding to Rep #1 being the first repetition is enabled (for example, does not overlap a UL symbol) while SLIV #1' corresponding to Rep #2 being the second repetition is disabled (for example, overlaps a UL symbol), it may be judged to be disabled (refer to FIG. 7). In this case, in consideration that the second repetition (SLIV #1') overlaps a UL symbol, SLIV #1 may be deleted for TDRA pruning.

### {Option 2-2}

Based on whether a specific repetition of a scheduled PDSCH overlaps a configured UL symbol, generation of an HARQ-ACK codebook may be controlled. For example, option 2-2 may be preferably applied to a case where, when the specific repetition of the scheduled PDSCH overlaps a configured UL symbol, the scheduled PDSCH is disabled (option 1-6 above).

For example, when the specific repetition is a first repetition of the scheduled PDSCH and the first repetition overlaps a UL symbol, it may be judged that the scheduled PDSCH is disabled.

Alternatively, when the specific repetition is a second repetition of the scheduled PDSCH and the second repetition overlaps a UL symbol, it may be judged that the scheduled PDSCH is disabled.

In this case, optimization of time domain resource allocation (TDRA) pruning (for example, TDRA pruning optimization) may be performed.

As a modification of the TDRA pruning, an SLIV having a start symbol S / length L may be deleted in TDRA pruning in each DL slot candidate. For example, when an SLIV having a certain start symbol S / length L overlaps a UL symbol (for example, a semi-static UL symbol), the SLIV may be deleted.

Assume a case where an SLIV cannot be scheduled for intra-slot M-TRP PDSCH repetition. The case where an SLIV cannot be scheduled for intra-slot M-TRP PDSCH repetition may be a case where (S + L + offset (K-) + L) is larger than 14, for example. In this case, when the SLIV overlaps a UL symbol (for example, a semi-static UL symbol), the SLIV may be deleted.

Assume a case where an SLIV can be scheduled for intra-slot M-TRP PDSCH repetition. The case where an SLIV can be scheduled for intra-slot M-TRP PDSCH repetition may be a case where (S + L + offset (K-) + L) is not larger than 14, for example. When the specific repetition is the second repetition and any of symbols from (S + L + K-) to (S + L + K- + L) overlaps a UL symbol, the SLIV may be deleted.

In other words, when the specific repetition is disabled (or overlaps a UL symbol), the UE performs control not to include (or to delete) an HARQ-ACK of the PDSCH in the slot in an HARQ-ACK codebook/feedback.

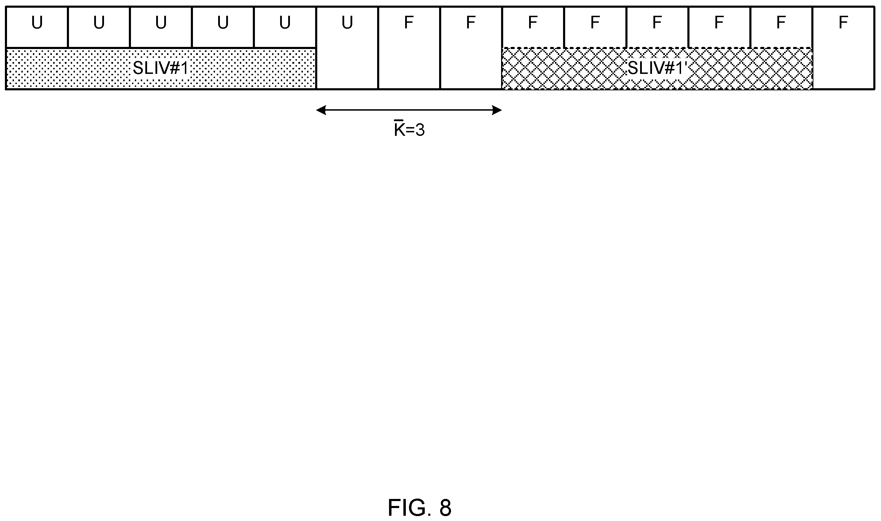

When the specific repetition is the second repetition and SLIV #1 corresponding to Rep #1 being the first repetition is disabled (for example, overlaps a UL symbol) while SLIV #1' corresponding to Rep #2 being the second repetition is enabled (for example, does not overlap a UL symbol), it may be judged to be enabled (refer to FIG. 8).

In this case, the UE may determine deletion of an SLIV (or the scheduled PDSCH), based only on enabling/disabling of the second repetition. In FIG. 8, in consideration that the second repetition (SLIV #1') does not overlap a UL symbol, it may be configured that SLIV #1 (or the PDSCH corresponding to SLIV #1 / SLIV #'1) is not deleted for TDRA pruning.

### {Option 2-3}

Based on whether all (for example, both) of repetitions of a scheduled PDSCH overlap configured UL symbols, generation of an HARQ-ACK codebook may be controlled. For example, option 2-3 may be preferably applied to a case where, when both of the repetitions of the scheduled PDSCH overlap configured UL symbols, the scheduled PDSCH is disabled (option 1-7 above).

In this case, optimization of time domain resource allocation (TDRA) pruning (for example, TDRA pruning optimization) may be performed.

As a modification of the TDRA pruning, an SLIV having a start symbol S / length L may be deleted in TDRA pruning in each DL slot candidate. For example, when an SLIV having a certain start symbol S / length L overlaps a UL symbol (for example, a semi-static UL symbol), the SLIV may be deleted.

Assume a case where an SLIV cannot be scheduled for intra-slot M-TRP PDSCH repetition. The case where an SLIV cannot be scheduled for intra-slot M-TRP PDSCH repetition may be a case where (S + L + offset (K-) + L) is larger than 14, for example. In this case, when the SLIV overlaps a UL symbol (for example, a semi-static UL symbol), the SLIV may be deleted.

Assume a case where an SLIV can be scheduled for intra-slot M-TRP PDSCH repetition. The case where an SLIV can be scheduled for intra-slot M-TRP PDSCH repetition may be a case where (S + L + offset (K-) + L) is not larger than 14, for example. In this case, in a case where the SLIV overlaps a UL symbol (for example, a semi-static UL symbol) and any of symbols from (S + L + K-) to (S + L + K- + L) overlaps a UL symbol, the SLIV may be deleted.

In other words, both a first repetition and a second repetition are disabled (or overlap UL symbols), the UE performs control not to include (or to delete) an HARQ-ACK of the PDSCH in the slot, in an HARQ-ACK codebook/feedback.

Note that the case where the SLIV overlaps a UL symbol (for example, a semi-static UL symbol) and any of symbols from (S + L + K-) to (S + L + K- + L) overlaps a UL symbol may be interpreted as a case where any of symbols from S to (S + L) and any of symbols from (S + L + K-) to (S + L + K- + L) overlaps a UL symbol.

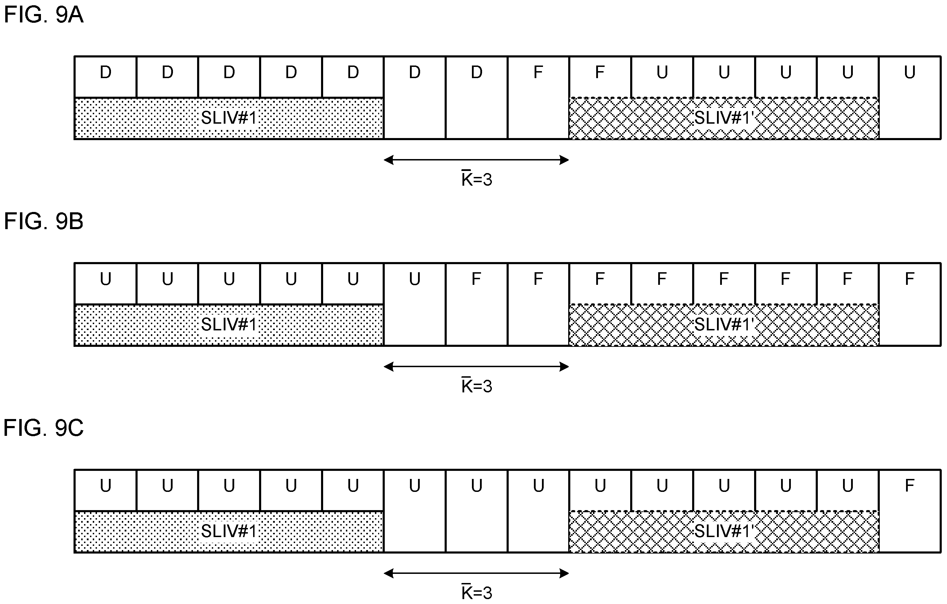

As described above, when either SLIV #1 corresponding to Rep #1 being the first repetition or SLIV #1' corresponding to Rep #2 being the second repetition is enabled (for example, does not overlap a UL symbol), it may be judged to be enabled (refer to FIG. 9A to FIG. 9C).

When SLIV #1 corresponding to Rep #1 being the first repetition is enabled (for example, does not overlap a UL symbol) and SLIV #1' corresponding to Rep #2 being the second repetition is disabled (for example, overlaps a UL symbol), it may be judged to be enabled (refer to FIG. 9A). In this case, it may be configured that SLIV #1 (or the PDSCH corresponding to SLIV #1 / SLIV #'1) is not deleted for TDRA pruning.

When SLIV #1 corresponding to Rep #1 being the first repetition is disabled (for example, overlaps a UL symbol) and SLIV #1' corresponding to Rep #2 being the second repetition is enabled (for example, does not overlap a UL symbol), it may be judged to be enabled (refer to FIG. 9B). It may be configured that SLIV #1 (or the PDSCH corresponding to SLIV #1 / SLIV #'1) is not deleted for TDRA pruning.

When SLIV #1 corresponding to Rep #1 being the first repetition is disabled (for example, overlaps a UL symbol) and SLIV #1' corresponding to Rep #2 being the second repetition is disabled (for example, overlaps a UL symbol), it may be judged to be disabled (refer to FIG. 9C). It may be configured that SLIV #1 (or the PDSCH corresponding to SLIV #1 / SLIV #'1) is deleted for TDRA pruning.

### <Variations>

When a scheduled PDSCH is judged to be disabled, a rule defined for single-TRP multi-PDSCH scheduling may be applied. For example, HPN may be skipped. A NACK may be reported for a dynamic (for example, Type-2) HARQ-ACK codebook/feedback.

DCI for multi-PDSCH scheduling (for example, multi-PDSCH scheduling DCI) may be a DCI format for DL grant for which a TDRA table including a plurality of SLIVs in at least one row.

### (UE Capability Information)

In the above embodiments (for example, the first embodiment and the second embodiment), the following UE capabilities may be configured. Note that the following UE capabilities may each be interpreted as a parameter (for example, a higher layer parameter) configured for the UE by a network (for example, the base station).

UE capability information related to whether a UE supports joint operation of single-DCI multi-TRP intra-slot PDSCH repetition and multi-PDSCH scheduling may be defined.

UE capability information related to whether a UE supports to determine enabling/disabling of a PDSCH based on a first/second repetition for joint operation of single-DCI multi-TRP intra-slot PDSCH repetition and multi-PDSCH scheduling may be defined.

UE capability information related to whether a UE supports to determine enabling/disabling of a PDSCH based on both repetitions for joint operation of single-DCI multi-TRP intra-slot PDSCH repetition and multi-PDSCH scheduling may be defined.

When a Type-1 HARQ-ACK codebook/feedback is configured, UE capability information related to whether a UE supports joint operation of single-DCI multi-TRP intra-slot PDSCH repetition and multi-PDSCH scheduling may be defined.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

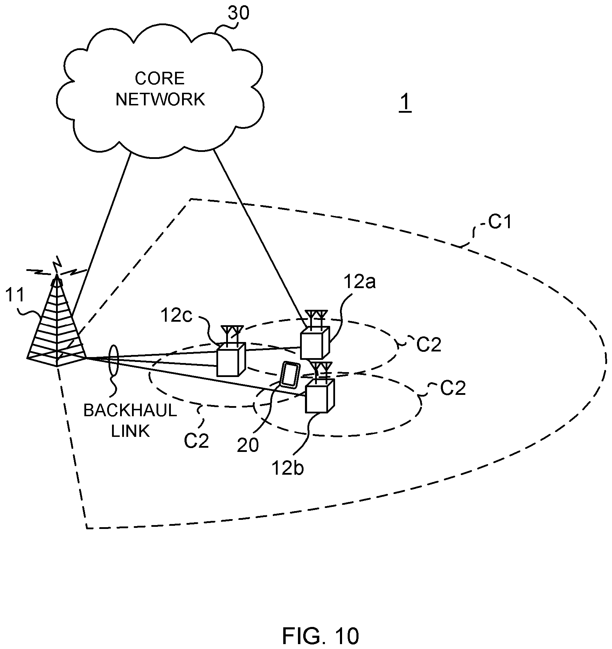

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for PBCH) may be referred to as an SS/PBCH block, an SS Block (SSB), and the like. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

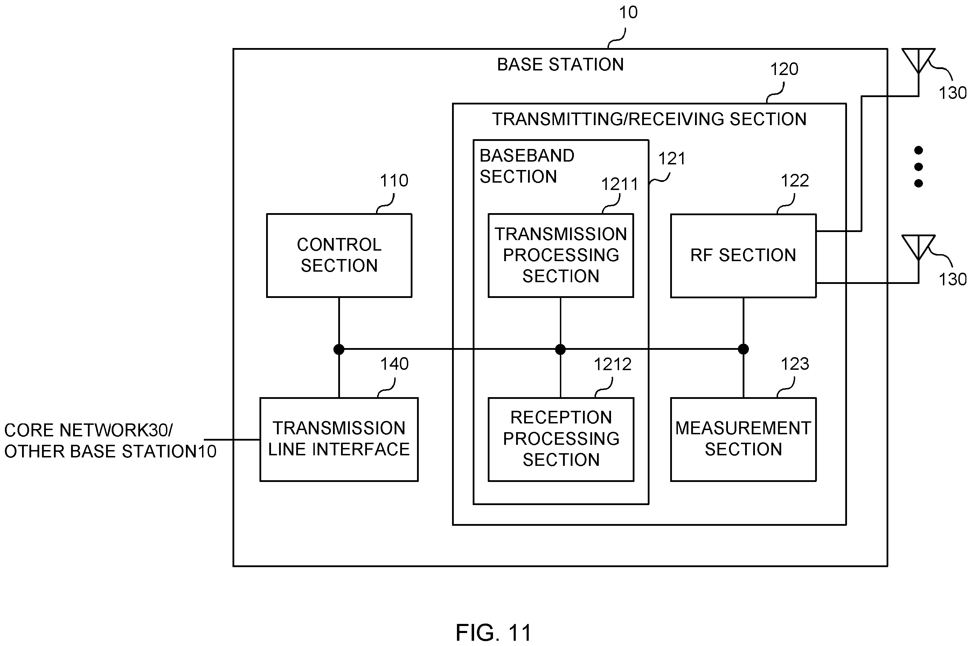

FIG. 11 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information related to a transmission direction of a symbol included in a slot.

In a case of configuring a plurality of repetition transmissions of a downlink shared channel to which a time division multiplexing (TDM) scheme is applied, in the slot, the control section 110 may perform control that at least one of the plurality of repetition transmissions does not overlap a UL symbol.

### (User Terminal)

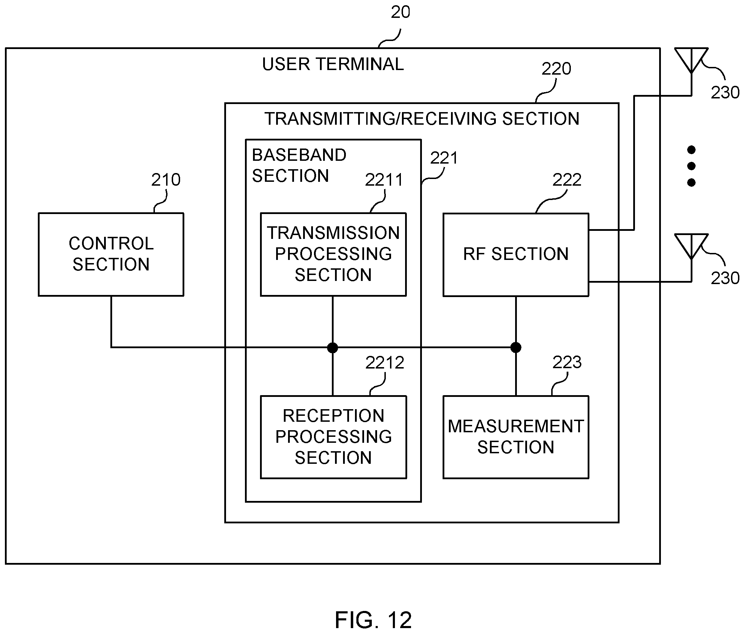

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate a bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a transmission direction of a symbol included in a slot.

In a case where a plurality of repetition transmissions of a downlink shared channel to which a time division multiplexing (TDM) scheme is applied are configured, in the slot, the control section 210 may assume that at least one of the plurality of repetition transmissions does not overlap a UL symbol (or assume accordingly to control HARQ-ACK codebook generation).

The control section 210 may determine that, when a certain repetition transmission of the plurality of repetition transmissions overlaps a UL symbol, a downlink shared channel scheduled in the slot is disabled.

When a semi-static delivery acknowledgement signal codebook is used to perform feedback of a delivery acknowledgement signal for the downlink shared channel, the control section 210 may control generation of the delivery acknowledgement signal codebook in consideration of an offset between the plurality of repetition transmissions (for example, a start offset corresponding to the second repetition).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

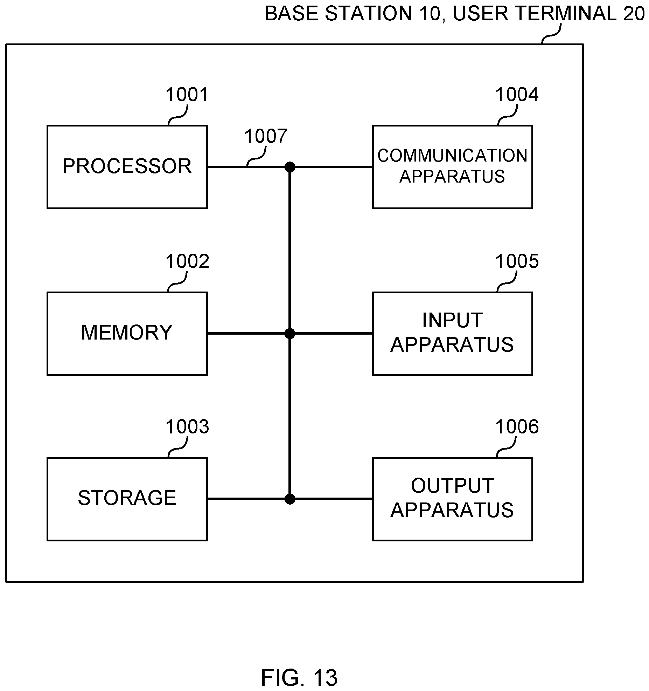

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

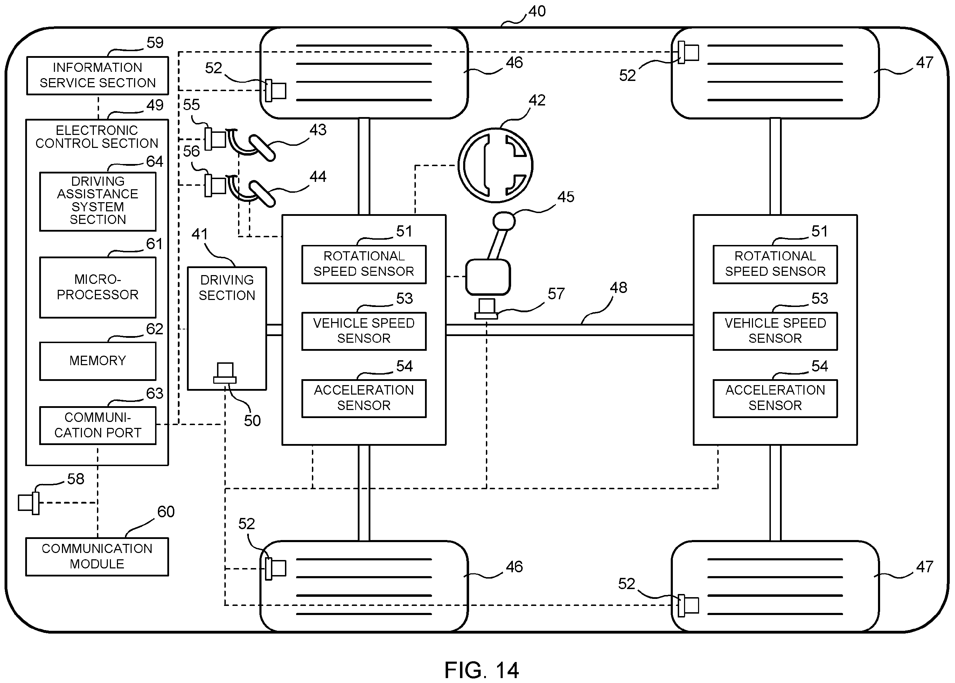

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-025284 filed on February 22, 2022, the entire contents of which are incorporated herein by reference.

## Claims

1. A terminal comprising:
a receiving section that receives information related to a transmission direction of a symbol included in a slot; and
a control section that assumes that, in a case where a plurality of repetition transmissions of a downlink shared channel to which a time division multiplexing (TDM) scheme is applied is configured in the slot, at least one of the plurality of repetition transmissions does not overlap a UL symbol.

2. The terminal according to claim 1, wherein
the control section determines that, when a certain repetition transmission of the plurality of repetition transmissions overlaps a UL symbol, a downlink shared channel scheduled in the slot is disabled.

3. The terminal according to claim 1 or 2, wherein
when a semi-static transmission confirmation signal codebook is used to perform feedback of a transmission confirmation signal for the downlink shared channel, the control section controls generation of the transmission confirmation signal codebook in consideration of an offset between the plurality of repetition transmissions.

4. A radio communication method for a terminal, the radio communication method comprising:
receiving information related to a transmission direction of a symbol included in a slot; and
assuming that, in a case where a plurality of repetition transmissions of a downlink shared channel to which a time division multiplexing (TDM) scheme is applied is configured in the slot, at least one of the plurality of repetition transmissions does not overlap a UL symbol.

5. A base station comprising:
a transmitting section that transmits information related to a transmission direction of a symbol included in a slot; and
a control section that perform, in a case of configuring a plurality of repetition transmissions of a downlink shared channel to which a time division multiplexing (TDM) scheme is applied, in the slot, control that at least one of the plurality of repetition transmissions does not overlap a UL symbol.
